**Europäisches Patentamt**

(19) **European Patent Office**

**Office européen des brevets**

(11) Publication number : **0 511 220 B1**

# (12) EUROPEAN PATENT SPECIFICATION

(45) Date of publication of patent specification : **09.08.95 Bulletin 95/32**

(51) Int. Cl.⁶ : **F02P 5/15**

(21) Application number : **91900750.0**

(22) Date of filing : **18.12.90**

(86) International application number :
**PCT/EP90/02223**

(87) International publication number :
**WO 91/10829 25.07.91 Gazette 91/17**

(54) **KNOCK CONTROL SYSTEM OF A SPARK IGNITION INTERNAL COMBUSTION ENGINE.**

(30) Priority : **19.01.90 DE 4001474**

(43) Date of publication of application :
**04.11.92 Bulletin 92/45**

(45) Publication of the grant of the patent :
**09.08.95 Bulletin 95/32**

(84) Designated Contracting States :
**FR GB IT**

(56) References cited :
**EP-A- 0 101 342**
**EP-A- 0 193 896**
**EP-A- 0 326 193**
**FR-A- 2 543 223**
**GB-A- 2 169 954**
**US-A- 4 829 962**

(73) Proprietor : **AUDI AG**
**D-85045 Ingolstadt (DE)**

(72) Inventor : **GIBTNER, Siegfried**
**Kammühlweg 60**
**D-8074 Gaimersheim (DE)**
Inventor : **PFALZGRAF, Bernhard**
**Unterringstr. 30**
**D-8070 Ingolstadt (DE)**
Inventor : **SCHRÖER, Axel**
**Hordorfer Str. 123**
**D-3300 Braunschweig (DE)**

(74) Representative : **Le Vrang, Klaus**
**AUDI AG,**
**Patentabteilung**
**D-85045 Ingolstadt (DE)**

## Description

The invention relates to a knock control system of a spark ignition internal combustion engine according to the precharacterising clause of claim 1.

For optimum running of a spark ignition i.c. engine, it is necessary to vary the ignition point in dependence upon speed and load. To achieve this, it is known practice to file, in a characteristic map of an electronic engine timing device, a characteristic map input for the ignition point in dependence upon operating parameters which is read out in each case for an actual ignition point.

A further known optimisation in terms of low fuel consumption and low pollutant emission is achieved in that the i.c. engine in the upper load and speed range is operated close to the knock limit. Since the position of the knock limit is variable and is dependent upon operating parameters, in particular upon the motor fuel quality, temperature and air pressure, it is known practice to effect knock control (FR-A-2 543 223) in the manner of short-time control.

With this method, when pinking occurs, the characteristic map input read out from the filed characteristic map is reset by one control stroke in the direction of retarded ignition to a value for the actual ignition point. In the subsequent absence of pinking (in FR-A-2 543 223 during 100 ignition periods), the value for the actual ignition point is moved by one control stroke in the direction of advanced ignition back to the characteristic map input.

Said short-time control is therefore related to the level of the filed characteristic map input. With unfavourable operating parameters, especially with poor-quality fuel, the knock limit may be relatively remote from the characteristic map input, with the result that control is operated with correspondingly large control strokes and a wide control band width. This is disadvantageous for control stability so that control is achieved at the price of relatively high number of detonating combustions with, in some cases, violent knocking. This has an adverse effect both on the material and on optimum running as well as affecting acoustic comfort through, to some extent, audible knocking.

It is further known practice to file a plurality of preset characteristic maps, which are determined from the outset, and to make said maps available as and when required. In this respect, it is known, for example, by changing a connector in the engine area to switch from a specific characteristic map allocated to running on supergrade fuel to a second preset characteristic map for use when running on regular fuel.

It is also known to effect such changeovers between characteristic maps automatically if a high incidence of pinking is recorded. Said changeovers are however in any case a, from the outset predetermined, global change or resetting of the ignition point for the entire engine characteristic map, so far as the region endangered by knocking is concerned. The reference level for short-time control is therefore only shifted by a specific global amount, with said shift being effected as a rough adaptation to changed conditions. The statements made above with regard to short-time control, in particular as regards control stability and the increased incidence of knocking, therefore also apply here in terms of the variously adapted levels.

Compared to this, the aim of the invention is to reduce the incidence of knocking and to keep knock control more stable as a whole.

Said aim is achieved by the features of claim 1.

According to claim 1, long-time adaptation is effected in that, on occurrence of instances of knocking, the characteristic map input is reset or modified by an adaptation value away from the knock limit so that short-time control is referred to a new ignition point input (characteristic map input plus adaptation value) or to a different level. The adaptation values are acquired in dependence upon the instances of knocking occurring within specific recurring monitoring intervals.

In this way, the reference level for control is advantageously newly acquired within the recurring monitoring intervals and in dependence upon the instances of knocking occurring therein, and the control range or the control band width and hence the knock limit should only be a slight distance from said reference level. The position of said reference level is varied in that suitable acquired adaptation values are added to the values from the filed characteristic map. This continuous retracing of the reference level for short-time control in conjunction with the reduction in the control band width leads on the whole to a reduced incidence of knocking and to a reduction in violent knocks, and hence both to improved acoustic comfort as well as reduced stress upon the i.c. engine. Knock regulation as a whole is in addition more stable and hence easier to control.

Attention is drawn to the fact that the above-said refers basically to a fixed or only slowly variable operating point, i.e. to an adaptation at a substantially fixed load and speed.

The reference level for short-time control is shifted from the filed characteristic map inputs in the direction of retarded ignition. If the knock limit gradually drifts back towards the original characteristic map input, for example as a result of filling the tank up with fuel of a better quality, the reference level should also be adapted and retraced for optimised running. This is achieved that in the absence of instances of knocking within at least one monitoring interval the adaptation value is reset in stages each of a specific restoring variable.

If no instances of knocking occur within several successive monitoring intervals, this indicates that control or the reference level is far too remote from the knock limit in the direction of retarded ignition. In order in this case to achieve rapid adaptation and resetting, claim 2 then proposes a corresponding increase in the amount of the restoring variable.

Advantageously, each cylinder of the i.c. engine is allocated its own characteristic maps and knock control with the adaptation according to the invention is effected in a cylinder-selective manner. Thus, each of the cylinders may be operated separately in the thermodynamically optimum manner, thereby making it possible to keep fuel consumption and pollutant emission to a minimum (claim 3).

In a first embodiment according to claim 4 , the adaptation value is acquired by taking the mean of the control strokes arising at the time of an instance of knocking in a monitoring interval. This already provides a good indication of the position of the knock limit with only a short dwell time or a short monitoring interval at a specific operating point.

In a second embodiment requiring a less complicated calculation method than the first embodiment, the adaptation values are acquired by taking the mean of all the control strokes arising in a monitoring interval. Said mean value variable also provides a suitable indication of the position of the knock limit and hence an adaptation and retracing of the reference level for short-time control (claim 5).

The knock limit, as is known, is not a precisely defined limit but is to be regarded as a statistical limit, with it also being possible for instances of knocking to occur above or below the acquired knock limit depending upon the quality of combustion at the time. Since the position of the knock limit is therefore not a precisely defined variable anyway, claim 6 proposes that an adaptation should only be effected when the mean value of the control strokes is above the value of a fixed threshold. This means that an adaptation should only be effected in the event of a major deviation from the statistically acquired knock limit. Adaptations which would be effected on account of the statistical band width of the knock limit are therefore excluded and the adaptation processes and hence the entire knock control process are stabilised.

Claim 7 indicates a concrete specification for acquiring an adaptation value from a mean control stroke. A new adaptation value ($L_{Znew}$) is to be calculated by adding the previous adaptation value ($L_{Zold}$) to the mean control stroke ($\overline{R_h}$). In addition, a preset threshold value (S) is to be subtracted. This means that the reference level for stabilising control is not to be placed precisely at the knock limit acquired by the mean control stroke but is shifted by the threshold value (S) in the direction of advanced ignition. A suitable control band width for short-time control is thereby made available, with instances of knocking which are statistically far above the knock limit in the direction of advanced ignition being truncated and not being taken into account in the control process. An adaptation should only occur when the mean control stroke ($\overline{R_h}$) is greater than a threshold value (S), with it being possible for said threshold value to be equal in size to the preceding one. A suitable threshold value is, for example, 0.75° KW.

In a third embodiment according to claim 8, preset increment values are added on each occurrence of knocking within a monitoring interval and an adaptation value is thereby acquired. Here too, it is possible to provide an adaptation only in the event that the acquired sum is above a preset threshold value.

In a further alternative according to claim 9, the adaptation value is only to be reset by the restoring variable if there are no instances of knocking at all in the monitoring interval but the mean control stroke and the sum of the increment values in a monitoring interval are less than the value of a threshold. A suitable threshold value for this threshold too is, for example, 0.75° KW.

When adaptation to a new adaptation value ($L_{Znew}$) is effected, the old actual control stroke ($R_{hold}$) would for the time being be retained and referred to the new reference level. This would lead to an undesirable sudden change in the control response which would only have to be corrected again by regulation to a new control stroke ($R_{hnew}$). With the features of claim 10, said sudden change is avoided by adapting the old control stroke ($R_{hold}$) from the start by the difference between the old adaptation value ($L_{Zold}$) and the new adaptation value ($L_{Znew}$).

A suitable monitoring interval comprises or refers, according to claim 11, to at least 500 ignitions.

According to claim 12, it is advantageous to retain the current adaptation value even when the i.c. engine or the vehicle is stopped so that, on starting up again, the adaptation variable is immediately available. This achieves the effect that knock control immediately operates with the desired low control band width.

The invention is further described in greater detail with reference to the drawings.

The drawings show:

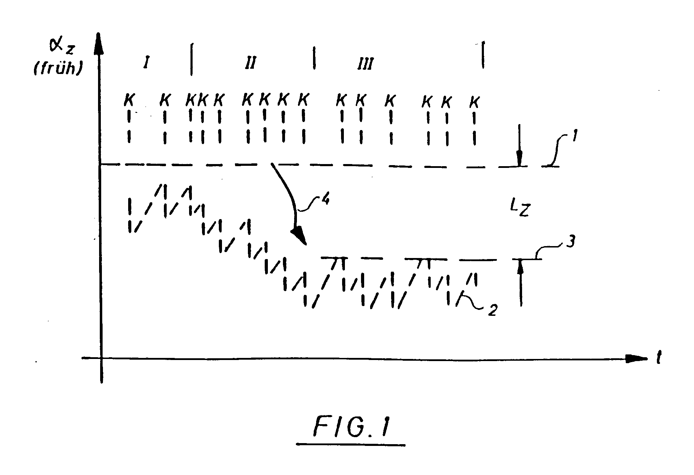

Fig.1      a diagram in which the adaptation of a reference level for short-time control is entered.

In the diagram of Fig.1, the value of the ignition angle $\alpha_z$ with the direction towards advanced ignition is plotted upwards against the rightward pointing time axis. The horizontal dashed line corresponds to a characteristic map input 1 for the ignition point from a permanently filed characteristic map. A fixed operating state at a specific operating point, i.e. for example, fixed load and fixed speed, is being considered, so that the characteristic map input 1, viewed with respect to time, remains constant.

Said characteristic map input 1 is so selected that the i.c. engine under normal operating conditions is being operated at the knock limit and so isolated instances of knocking may occur. Said state is shown in the interval I in which, with the aid of a known and not explicitly described short-time control, said characteristic map input is on the occurrence of knocking (K) reset by a control stroke in the "retarded" direction to a value for an actual ignition point (shown by the curve II). Subsequently, in the absence of knocking, the value for the actual ignition point is moved by one control stroke in the direction of advanced ignition back to the characteristic map input 1. Short-time control in the interval I therefore leads to actual ignition points (curve 2) which are slightly below the characteristic map input 1.

As a result of changes in operating parameters, e.g. after a poorer-quality fuel has been added and gradually mixes with the contents of the tank, instances of knocking increasingly arise successively in interval II. Consequently, the actual ignition points (curve 2) are successively moved further away from the original characteristic map input 1 in the "retarded" direction as a result of the addition of successive control strokes.

At such a level corresponding to a changed knock limit, short-time control levels out again, as is shown in interval III.

According to the invention, instead of the characteristic map input 1 an adapted characteristic map input 3 is then introduced as a new reference level for short-time control in that the characteristic map input is reset in a type of regulation relative to the new knock limit in dependence upon the incidence of knocking to the adapted value 3, as is diagrammatically indicated by the arrow 4. Said resetting is achieved in that the original characteristic map input 1 is acted upon by a variable adaptation value ($L_Z$).

The adaptation value ($L_Z$) is acquired within specific recurring monitoring intervals in dependence upon the knocking incidence, with ignitions in the order of magnitude of 500 ignitions arising in one monitoring interval. Suitable adaptation values are obtained by taking the mean of the control strokes arising in the monitoring interval, with it being possible to use either only the control strokes on occurrence of an instance of knocking or all the control strokes carried out in the monitoring interval. A suitable adaptation value may also be obtained in that, upon each instance of knocking, an increment value is output and said values are added up. Advantageously, a change in an adaptation value ($L_Z$) is only effected when the mean values obtained are above a specific threshold (S). With the "increment system", a specific increment value is always added upon detection of knocking. For restoring of the ignition points, a monitoring interval is again defined in which no instance of knocking (or only a limited number of instances of knocking) has been detected.

In a subsequent monitoring interval, (upon changes in the operating parameters) a relatively high number of control strokes are detected, the mean value of which should lie above a threshold (S). A new adaptation value ($L_{Znew}$), which is produced from the previous adaptation value ($L_{Zold}$) by adding the mean value of the control strokes ($\overline{R_h}$) less a threshold value (S), is then calculated and output. Said threshold value may advantageously correspond to the previous threshold value.

To restore the ignition points towards the original characteristic map input 1, a previous adaptation value ($L_{Zold}$) is then reduced by a restoring value ($\Delta L_K$) to a new adaptation value ($L_{Znew}$) when no instances of knocking are detected in the new monitoring interval or their mean value ($\overline{R_h}$) is less than the preset threshold.

In the following there is described an actual test record for four cylinders of an i.c. engine in which the actual ignition point is plotted against time.

For the first cylinder the short-time control runs in the direct vicinity of the characteristic map input and so, in this case, control is operated in the optimum manner from the start. This may be caused, for example, by the fact that the first cylinder, being positioned at the front, is more efficiently cooled and is operated at lower temperatures than the other cylinders.

For the remaining cylinders 2 to 4 actual ignition points are regulated relatively far away from the characteristic map input so that the adaptation according to the invention by means of adaptation values ($L_Z$) has been effected. The concrete values are explained in greater detail with reference to cylinder 4:

In an interval I, no adaptation value has yet been acquired and the control band width, with many fluctuations, is relatively great. In interval II, through taking the mean of the control strokes, an adaptation value of $\Delta \alpha_z = - 3°$ has been acquired and added to the original characteristic map input. As a result of the lower reference value thus created, the ignition points are at approximately the same level with more stable control with a reduced control band width.

At the end of interval II, fewer instances of knocking then occur, so that the input is reset with an adaptation value $\Delta \alpha_z = - 2°$. At the end of this region, there is again an increased incidence of knocking so that, in interval IV, the adaptation value is again set at $\Delta \alpha_z = - 3°$. It is evident that adaptation of the reference level is conducted almost continuously in dependence upon the number of instances of knocking in one monitoring interval.

Legends of drawings:

Fig.1
(früh) = (advanced)


**Claims**

1. Knock control system of a spark ignition internal combustion engine,
   having a short-time control in which a charactertistic map input (1) for the ignition point is produced from a characteristic map permanently filed in dependence upon operating parameters,
   on occurrence of instances of knocking (K) said characteristic map input (1) is reset by a control stroke in the "retarded" direction to a value for an actual ignition point (2) and
   in the subsequent absence of instances of knocking (K) the value for the actual ignition point (2) is moved by a control stroke ($R_h$) in the "advanced" direction back to the characteristic map input (1),
   characterised in that
   an additional long-time adaptation is provided
   the long-time adaptation is effected in that
   on occurrence of instances of knocking (K) the characteristic map input (1) is reset by an adaptation value ($L_Z$) away from the knock limit so that the short-time control is referred to a new ignition point input,
   that the adaptation values ($L_Z$) are acquired within specific recurring monitoring intervals in dependence upon the instances of knocking (K) arising, and
   that in the absence of instances of knocking (K) within at least one monitoring interval, the adaptation value ($L_Z$) is reset in stages each of one specific restoring value ($\Delta L_K$) to the original characteristic map input.

2. Knock control system according to claim 1, characterised in that, in the absence of instances of knocking (K) within at least two successive monitoring intervals, the amount of the restoring value ($\Delta L_K$) is increased for more rapid restoring.

3. Knock control system according to one of claims 1 or 2, characterised in that a cylinder-selective knock control is provided for each cylinder of the internal combustion engine.

4. Knock control system according to one of claims 1 to 3 , characterised in that the adaptation value ($L_Z$) is obtained by taking the mean of the control strokes prevailing at the time of an instance of knocking in one monitoring interval.

5. Knock control system according to one of claims 1 to 3, characterised in that the adaptation value ($L_Z$) is obtained by taking the mean of all the control strokes prevailing in a monitoring interval.

6. Knock control system according to claim 4 or 5, characterised in that adaptation with an adaptation value is only effected when the mean value of the control strokes ($\overline{R_h}$) is above the value of a fixed threshold.

7. Knock control system according to one of claims 4 to 6 , characterised in that from a previous adaptation value after a subsequent monitoring interval on detection of a mean control stroke greater than or equal to a threshold a new adaptation value is formed in that the previous adaptation value is increased by the mean control stroke and said value is reduced by the value of the threshold

$$\overline{R_h} \gumeq S$$
$$L_{Znew} = L_{Zold} + \overline{R_h} - S$$

   wherein $R_h$ = mean control stroke
   S = threshold
   $L_{Znew}$ = new adaption value
   $L_{Zold}$ = previous adaption value

8. Knock control system according to one of claims 1 to 3, characterised in that the adaptation value ($L_Z$) is obtained by adding preset increment values assigned to each instance of knocking during a monitoring interval.

9. Knock control system according to one of claims 1 to 8, characterised in that the previous adaption value

5

is reset by the restoring value to a new adaptation value when the mean control stroke and the sum of the increment values in a monitoring interval are less than the value of a threshold.

$$L_{Znew} = L_{Zold} - \Delta L_K$$

wherein $L_{Znew}$ = new adaption value
$L_{Zold}$ = previous adaption value
$\Delta L_K$ = restoring value

10. Knock control system according to one of claims 1 to 9, characterised in that during adaptation with a new adaptation value, to avoid a sudden change, adaptation of a new control stroke is also effected in that the previous control stroke is varied by the difference between the previous adaptation value and the new adaptation value.

$$R_{hnew} = R_{hold} + L_{Zold} - L_{Znew}$$

wherein $R_{hnew}$ = new control stroke
$R_{hold}$ = previous control stroke
$L_{Zold}$ = previous adaption value
$L_{Znew}$ = new adaption value

11. Knock control system according to one of claims 1 to 10, characterised in that a suitable monitoring interval comprises at least 500 ignitions.

12. Knock control system according to one of claims 1 to 11, characterised in that the adaptation value ($L_Z$) is retained even when the internal combustion engine or the vehicle is stopped and is available as an adaptation variable immediately upon restarting.

**Patentansprüche**

1. Klopfregelung einer fremdgezündeten Brennkraftmaschine,
mit einer Kurzzeitregelung, bei der aus einem in Abhängigkeit von Betriebsparametern fest abgelegten Kennfeld eine Kennfeldvorgabe (1) für den Zündzeitpunkt erfolgt,
beim Auftreten von Klopfereignissen (K) diese Kennfeldvorgabe (1) um einen Regelhub auf einen Wert für einen aktuellen Zündzeitpunkt (2) in Richtung "spät" zurückgenommen wird und
beim weiteren Ausbleiben von Klopfereignissen (K) der Wert für den aktuellen Zündzeitpunkt (2) um einen Regelhub ($R_h$) in Richtung "früh" wieder auf die Kennfeldvorgabe (1) hingeführt wird,
dadurch gekennzeichnet,
daß eine zusätzliche Langzeitanpassung vorgesehen ist,
daß die Langzeitanpassung in der Weise ausgeführt ist,
daß die Kennfeldvorgabe (1) bei auftretenden Klopfereignissen (K) um einen Anpassungswert ($L_Z$) von der Klopfgrenze weg zurückgenommen, so daß die Kurzzeitregelung auf eine neue Zündzeitpunktvorgabe bezogen ist,
daß innerhalb bestimmter, sich wiederholender Beobachtungszeitintervalle jeweils die Anpassungswerte ($L_Z$) in Abhängigkeit der auftretenden Klopfereignisse (K) ermittelt werden, und
daß beim Ausbleiben von Klopfereignissen (K) innerhalb wenigstens eines Beobachtungsintervalls der Anpassungswert ($L_Z$) in Richtung auf die ursprüngliche Kennfeldvorgabe jeweils schrittweise um eine bestimmte Rückführgröße ($\Delta L_K$) zurückgenommen wird.

2. Klopfregelung nach Anspruch 1, dadurch gekennzeichnet, daß beim Ausbleiben von Klopfereignissen (K) innerhalb von wenigstens zwei nacheinanderfolgenden Beobachtungszeitintervallen der Betrag der Rückführgröße ($\Delta L_K$) für eine schnellere Rückführung vergrößert wird.

3. Klopfregelung nach einem der Ansprüche 1 bis 2, dadurch gekennzeichnet, daß für jeden Zylinder der Brennkraftmaschine eine zylinderselektive Klopfregelung vorgesehen ist.

4. Klopfregelung nach einem der Ansprüche 1 bis 3, dadurch gekennzeichnet, daß der Anpassungswert ($L_Z$) durch Mittelung der jeweils zum Zeitpunkt eines Klopfereignisses vorliegenden Regelhübe in einem Beobachtungszeitintervall erhalten wird.

5. Klopfregelung nach einem der Ansprüche 1 bis 3, dadurch gekennzeichnet, daß der Anpassungswert ($L_Z$)

durch Mittelung aller in einem Beobachtungszeitintervall vorliegenden Regelhübe erhalten wird.

6. Klopfregelung nach Anspruch 4 oder 5, dadurch gekennzeichnet, daß eine Anpassung mit einem Anpassungswert nur dann erfolgt, wenn der Wert der gemittelten Regelhübe ($\overline{R_h}$) über dem Wert einer festgelegten Schwelle liegt.

7. Klopfregelung nach einem der Ansprüche 4 bis 6, dadurch gekennzeichnet, daß aus einem vorhergehenden Anpassungswert nach einem weiteren Beobachtungsintervall bei Feststellung eines gemittelten Regelhubs größer oder gleich einer Schwelle ein neuer Anpassungswert dadurch gebildet wird, daß der vorhergehende Anpassungswert um den gemittelten Regelhub vergrößert wird und dieser Wert um den Wert der Schwelle verkleinert wird.

$$\overline{R_h} \geqq S$$
$$L_{Zneu} = L_{Zalt} + \overline{R_h} - S.$$

wobei:

$R_h$ = gemittelter Regelhub
$S$ = Schwelle
$L_{Zneu}$ = neuer Anpassungswert
$L_{zalt}$ = vorhergehender Anpassungswert

8. Klopfregelung nach einem der Ansprüche 1 bis 3, dadurch gekennzeichnet, daß der Anpassungswert ($L_Z$) durch Aufsummierung von vorgegebenen, jedem Klopfereignis zugeordneten, Inkrementwerten während eines Beboachtungszeitintervalls erhalten wird.

9. Klopfregelung nach einem der Ansprüche 1 bis 8, dadurch gekennzeichnet, daß der vorhergehende Anpassungswert um die Rückführgröße auf einen neuen Anpassungswert zurückgenommen wird, wenn der gemittelte Regelhub und die Summe der Inkrementwerte in einem Beobachtungszeitintervall kleiner als der Wert einer Schwelle sind.

$$L_{Zneu} = L_{Zalt} - \Delta L_K.$$

wobei:

$L_{Zneu}$ = neuer Anpassungsert
$L_{Zalt}$ = vorhergehender Anpassungswert
$\Delta L_K$ = Rückführgröße

10. Klopfregelung nach einem der Ansprüche 1 bis 9, dadurch gekennzeichnet, daß bei der Anpassung mit einem neuen Anpassungswert zur Vermeidung eines Sprungs auch eine Anpassung eines neuen Regelhubs dadurch erfolgt, daß der vorhergehende Regelhub um die Differenz zwischen dem vorhergehenden und neuen Anpassungswert geändert wird.

$$R_{hneu} = R_{halt} + L_{Zalt} - L_{Zneu}.$$

wobei:

$R_{hneu}$ = neuer Regelhub
$R_{halt}$ = vorhergehender Regelhub
$L_{Zalt}$ = vorhergehender Anpassungswert
$L_{Zneu}$ = neuer Anpassungswert

11. Klopfregelung nach einem der Ansprüche 1 bis 10, dadurch gekennzeichnet, daß ein geeignetes Beobachtungszeitintervall mindestens 500 Zündungen enthält.

12. Klopfregelung nach einem der Ansprüche 1 bis 11, dadurch gekennzeichnet, daß der Anpassungswert ($L_Z$) auch beim Abstellen der Brennkraftmaschine bzw. des Fahrzeugs festgehalten wird und beim Wiederanlassen sofort als Anpassungsgröße zur Verfügung steht.

## Revendications

1. Système de réglage anti-cognement pour un moteur à combustion interne à allumage commandé, comprenant un réglage à court terme, dans lequel il est produit, à partir d'une table de valeurs caractéristiques mémorisée de façon permanente en fonction de paramètres de fonctionnement, une donnée d'entrée (1) de la table de valeurs caractéristiques pour le point d'allumage,

à l'apparition de phénomènes de cognement (K), ladite donnée d'entrée (1) de la table de valeurs caractéristiques est réajustée d'une certaine quantité de réglage, dans le sens du "retard", à une valeur pour un point d'allumage présent (2) et

en l'absence subséquente de phénomènes de cognement (K), la valeur pour le point d'allumage présent (2) est ramenée d'une quantité de réglage ($R_h$) dans le sens de l'"avance", à la donnée d'entrée (1) de la table de valeurs caractéristiques,

caractérisé en ce qu'il est prévu une adaptation supplémentaire à long terme,

l'adaptation à long terme consistant

en ce qu'à l'apparition de phénomènes de cognement (K), la donnée d'entrée (1) de la table de valeurs caractéristiques est réajustée d'une certaine valeur d'adaptation ($L_Z$) qui l'écarte de la limite de cognement, de sorte que le réglage à court terme se base sur une nouvelle donnée d'entrée pour le point d'allumage,

en ce que les valeurs d'adaptation ($L_Z$) sont acquises dans des intervalles de surveillance répétitifs en fonction des phénomènes de cognement (K) qui apparaissent, et

en ce qu'en l'absence de phénomènes de cognement (K) dans les limites d'au moins un intervalle de surveillance, la valeur d'adaptation ($L_Z$) est réajustée, par pas ayant chacun une valeur spécifique de retour ($\Delta L_K$), à la donnée d'entrée initiale de la table de valeurs caractéristiques.

2. Système de réglage anti-cognement selon la revendication 1, caractérisé en ce qu'en l'absence de phénomènes de cognement (K) dans les limites d'au moins deux intervalles de surveillance successifs, la grandeur de la valeur de retour ($\Delta L_K$) est augmentée pour un retour plus rapide.

3. Système de réglage anti-cognement selon la revendication 1 ou 2, caractérisé en ce qu'un réglage anti-cognement sélectif du cylindre est prévu pour chaque cylindre du moteur à combustion interne.

4. Système de réglage anti-cognement selon l'une quelconque des revendications 1 à 3, caractérisé en ce que la valeur d'adaptation ($L_Z$) est obtenue par calcul de la moyenne des quantités de réglage en vigueur au moment d'un phénomène de cognement dans un intervalle de surveillance.

5. Système de réglage anti-cognement selon l'une quelconque des revendications 1 à 3, caractérisé en ce que la valeur d'adaptation ($L_Z$) est obtenue par calcul de la moyenne de toutes les quantités de réglage en vigueur dans un intervalle de surveillance.

6. Système de réglage anti-cognement selon la revendication 4 ou 5, caractérisé en ce que l'adaptation avec une valeur d'adaptation n'est effectuée que quand la valeur moyenne des quantités de réglage ($\overline{R_h}$) est supérieure à la valeur d'un seuil fixé.

7. Système de réglage anti-cognement selon l'une quelconque des revendications 4 à 6, caractérisé en ce qu'à partir d'une valeur d'adaptation précédente, après un intervalle de surveillance subséquent, lors de la détection d'une quantité de réglage moyenne supérieure ou égale à un seuil, une nouvelle valeur d'adaptation est formée par le fait que la valeur d'adaptation précédente est augmentée de la quantité de réglage moyenne et ladite valeur est réduite de la valeur du seuil:

$$\overline{R_h} \geqq S$$
$$L_{Z\ nouvelle} = L_{Z\ ancienne} + \overline{R_h} - S,$$

où $\overline{R_h}$ = Quantité de réglage moyenne,

S = Seuil,

$L_{Z\ nouvelle}$ = Nouvelle valeur d'adaptation,

$L_{Z\ ancienne}$ = Valeur d'adaptation précédente.

8. Système de réglage anti-cognement selon l'une quelconque des revendications 1 à 3, caractérisé en ce que la valeur d'adaptation ($L_Z$) est obtenue par sommation de valeurs incrémentielles prédéfinies, affectées à chaque phénomène de cognement pendant un intervalle de surveillance.

9. Système de réglage anti-cognement selon l'une quelconque des revendications 1 à 8, caractérisé en ce que la valeur d'adaptation précédente est réajustée, de la valeur de retour, à une nouvelle valeur d'adaptation lorsque la quantité de réglage moyenne et la somme des valeurs incrémentielles dans un intervalle de surveillance sont inférieures à la valeur d'un seuil:

$$L_{Z\ nouvelle} = L_{Z\ ancienne} - \Delta L_K$$

où $L_{Z\ nouvelle}$ = Nouvelle valeur d'adaptation
$L_{Z\ ancienne}$ = Valeur d'adaptation précédente
$\Delta L_K$ = Valeur de retour.

10. Système de réglage anti-cognement selon l'une quelconque des revendications 1 à 9, caractérisé en ce qu'au cours de l'adaptation avec une nouvelle valeur d'adaptation, afin d'éviter un changement brusque, une adaptation d'une nouvelle quantité de réglage est également effectuée par le fait que la course de réglage précédente est modifiée de la différence entre la valeur d'adaptation précédente et la nouvelle valeur d'adaptation:

$$R_{h\ nouvelle} = R_{h\ ancienne} + L_{Z\ ancienne} - L_{Z\ nouvelle}$$

où $R_{h\ nouvelle}$ = Nouvelle quantité de réglage
$R_{h\ ancienne}$ = Quantité de réglage précédente
$L_{Z\ ancienne}$ = Valeur d'adaptation précédente
$L_{Z\ nouvelle}$ = Nouvelle valeur d'adaptation.

11. Système de réglage anti-cognement selon l'une quelconque des revendications 1 à 10, caractérisé en ce qu'un intervalle de surveillance approprié comprend au moins 500 allumages.

12. Système de réglage anti-cognement selon l'une quelconque des revendications 1 à 11, caractérisé en ce que la valeur d'adaptation ($L_Z$) est conservée, même lorsque le moteur à combustion interne ou le véhicule est arrêté, et elle est immédiatement disponible en tant que variable d'adaptation au redémarrage.

*FIG. 1*